# EUROPÄISCHE PATENTSCHRIFT

(11) **EP 0 836 078 B1**
(45) Veröffentlichungstag und Bekanntmachung des Hinweises auf die Patenterteilung: **18.12.2002**
(21) Anmeldenummer: 97115295.4
(22) Anmeldetag: 04.09.1997
(51) Int. Cl.: G01D 5/347, G01B 5/00

(54) **Massstab einer Längenmesseinrichtung sowie Verfahren zur Anbringung eines Massstabs**
Measuring scale for a length-measuring device and procedure for mounting the scale
Echelle de mesure ainsi que procédé de montage pour un appareil de mesure de longueur

(30) Priorität: 11.10.1996 DE 19641965; 11.10.1996 DE 19641966; 10.07.1997 DE 19729481
(43) Veröffentlichungstag der Anmeldung: 15.04.1998
(73) Patentinhaber: Dr. Johannes Heidenhain GmbH, 83292 Traunreut (DE)
(72) Erfinder: Nelle, Günther, Dr.-Ing., 83346 Bergen (DE)

(56) Entgegenhaltungen:
- DE-A- 3 020 003
- DE-A- 4 406 799
- US-A- 4 198 757
- US-A- 4 649 648

## Beschreibung

Die Erfindung betrifft einen Maßstab einer Meßeinrichtung zur Messung der Relativbewegung zueinander bewegbarer Objekte sowie ein Verfahren zur Anbringung eines Maßstabs gemäß der Ansprüche 1 und 10 sowie ferner eine Meßeinrichtung mit einem derartigen Maßstab und einer Abtasteinheit.

Ein Maßstab der gattungsgemäßen Art ist beispielsweise in der DE 25 05 585 C3, der DE 36 25 795 C2 und der DE 35 30 776 C2 beschrieben und wird in einem gängigen Anwendungsfall zur Erfassung der relativen Lage eines bewegbaren Teils einer Werkzeugmaschine verwendet. In diesem Fall handelt es sich bei dem einen Objekt, an dem der Maßstab als Teil einer Meßeinrichtung zur Messung der Relativbewegung zweier zueinander bewegbaren Objekte befestigt wird, um das Maschinenbett der erwähnten Werkzeugmaschine. Für die Erfassung der relativen Lage des Maschinenbetts und eines darauf aufgespannten Werkstücks bezüglich eines an einem beweglichen Teil der Maschine angeordneten Werkzeugs ist an dem beweglichen Teil der Maschine, also z.B. dem Support des Maschinenbetts eine Abtasteinheit angebracht. Die Abtasteinheit ist somit an einem beweglichen Teil der Maschine befestigt und tastet den an dem feststehenden Maschinenbett angebrachten Maßstab in geeigneter Weise ab.

Für die Befestigung eines derartigen Maßstabs an einem Objekt ist es aus der DE 25 05 585 C3 bekannt, den Maßstab in einen Hohlkörper einzubringen, der über an seinen Enden vorgesehene, gelenkartig ausgebildete Befestigungselemente an dem Objekt befestigt ist. Diese Anordnung dient insbesondere der Vermeidung von Zwangskräften bei der Anbringung des Hohlkörpers, in dem der Maßstab aufgenommen ist.

Neben dem Auftreten von Zwangskräften bei der Anbringung eines Maßstabs oder des Gehäuses eines Maßstabs resultieren aus der Längenänderung der beteiligten Bauteile infolge von Temperaturschwankungen besondere Probleme. Die in dieser Hinsicht durch die Anordnung der DE 36 25 795 C2 erreichte Verbesserung bestand darin, daß die Lage eines Meßbezugspunktes am Maßstab unabhängig von besonderen Gegebenheiten der Bearbeitungsmaschine, an die der Maßstab anzubringen ist, insbesondere hinsichtlich des Temperaturverhaltens eingestellt werden konnte. Hierzu sind verschiedene Längenausgleichselemente vorgesehen.

Idealerweise ist der Maßstab jedoch derart an einem Objekt zu befestigen, daß sein Ausdehnungsverhalten bei Temperaturschwankungen an das Ausdehnungsverhalten des Objekts angepaßt ist, an das er angebracht ist. Um zu erreichen, daß ein an einem Objekt angebrachter Maßstab derart mit dem Objekt "mitatmet", sich also hinsichtlich seiner Längenausdehnung und -schrumpfung an das Verhalten des Objekts anpaßt, sind in der Technik bekannte Maßstäbe von Meßeinrichtungen über entsprechend stark dimensionierte Schrauben befestigt. Bei einer derartigen Verbindung wird der Maßstab also mit so hoher Kraft an das Objekt angepreßt, daß er aufgrund den an der Anpreßfläche übertragenen Reibungskräften den Längenänderungen des Objekts folgt.

Eine derartige Verbindung stellt jedoch hohe Anforderungen an die zu verwendenden Befestigungsschrauben und kann darüber hinaus nicht garantieren, daß die Längenausdehnung des Maßstabs über dessen gesamte Länge gleichmäßig erfolgt. Ferner können insbesondere bei langen Maßstäben Schwingungen auftreten, die zu Meßfehlern bei der Erfassung der relativen Lage des Objekts führen, an dem der Maßstab befestigt ist. Diese Probleme bestehen in gleicher Weise bei der Anbringung der Abtasteinheit, die mit dem Maßstab zusammenwirkt.

Bei der Anordnung gemäß der DE 35 30 776 C2 bzw. der US 4 649 648 A ist eine formschlüssige Verbindung des Maßstabs mit einem Objekt vorgesehen. Diese formschlüssige Verbindung erfolgt über abgerundete Oberflächen von Elementen, die an dem Maßstab angebracht sind, und über Montageblöcke, die an dem Objekt anzubringen sind. Die Montageblöcke weisen geeignet geformte Flächen auf, mit denen die abgerundeten Oberflächen der entsprechenden Elemente an dem Maßstab zur Ausbildung einer formschlüssigen Befestigung des Maßstabs an dem Objekt in Eingriff stehen.

Für diese bekannte, über eigene Montageblöcke auszubildende formschlüssige Befestigung eines Maßstabs muß in aufwendiger Weise gewährleistet werden, daß die Montageblöcke sicher in einer definierten Lage an dem Objekt befestigt sind. Die Befestigung dieser Komponenten der mit den korrespondierenden Elementen an dem Maßstab auszubildenden forschlüssigen Verbindung kann insbesondere nicht ausschließlich durch Schrauben erfolgen, sondern es ist zusäztlich eine Verstiftung vorzusehen. Folglich weist die aus der genannten Druckschrift bekannte Anordnung zur formschlüssigen Befestigung eines Maßstabs den Nachteil auf, daß sie vergleichsweise aufwendig ist.

In Anbetracht der geschilderten Nachteile der im Stand der Technik bekannten Maßstäbe und Abtasteinheiten von Längenmeßeinrichtungen sowie Anordnungen zur Anbringung eines Maßstabs liegt der Erfindung das technische Problem zugrunde, einen Maßstab sowie ein Verfahren zur Anbringung eines Maßstabs zu schaffen, der auf einfache Weise derart an einem Objekt befestigt werden kann, daß eine zuverlässige und präzise Abtastung des Maßstabs durch eine Abtasteinheit zur Erfassung der relativen Lage eines Objekts möglich ist.

Die Lösung dieser Aufgabe wird durch eine Vorrichtung und ein Verfahren mit den Merkmalen der Ansprüche 1 und 10 erreicht.

Demzufolge weist der Maßstab Mittel für zumindest eine formschlüssige Verbindung mit einem Objekt auf, die entlang der Längserstreckung des Maßstabs ausgebildet ist. Durch die erfindungsgemäße formschlüssige Verbindung des Maßstabs mit einem Objekt wird zum einen erreicht, daß auf die für einen Kraftschluß üblicherweise erforderlichen Befestigungselemente, wie z.B. hochbelastbare Schrauben, verzichtet werden kann. Eine formschlüssige Verbindung sorgt in vorteilhafter Weise für eine günstige Übertragung von Kräften, die bei Temperaturschwankungen infolge von Längenveränderungen des Objekts auftreten, auf den an dem Objekt angebrachten Maßstab.

Da die erfindungsgemäße formschlüssige Verbindung ferner entlang der Längserstreckung des Maßstabs ausgebildet ist, wird durch den mit neuartigen Befestigungsmitteln versehenen Maßstab eine Anbringung an einem Objekt ermöglicht, die für eine besonders gute Abstützung des Maßstabs sorgt. Bei langen Maßstäben kann eine derartige Befestigung dazu verwendet werden, Schwingungen des Maßstabs in senkrecht zur Längserstreckung des Maßstabs verlaufenden Richtungen zu verhindern. Durch die Verhinderung derartiger Schwingungen wird eine Verbesserung der Genauigkeit bei der Erfassung und Abtastung des Maßstabs erreicht. Ferner kann durch entsprechende Ausbildung der formschlüssigen Verbindung im VerlauE der Längserstreckung des Maßstabs erreicht werden, daß der Maßstab besonders gleichmäßig einer Ausdehnung bzw. Schrumpfung desjenigen Objekts folgt, an dem er angebracht ist.

Hierzu ist es zwar aus der EP 0 110 059 B1 bekannt, etwa in der Mitte eines Maßstabträgers ein Befestigungselement anzubringen, über das eine Befestigung an einem Objekt erfolgt. Das in dieser Druckschrift offenbarte Befestigungselement verwendet jedoch einen Kraftschluß über eine Befestigungsschraube zur Übertragung der auftretenden Kräfte auf den befestigten Maßstab, so daß erst durch die erfindungsgemäß als formschlüssige Verbindung auszubildende Befestigung des Maßstabs eine Vermeidung der gemäß dem Stand der Technik notwendigen, besonders hochbelastbar auszubildenden Schrauben erreicht wird. Ferner sind bei der in der genannten Druckschrift gezeigten Anordnung im Bereich der Befestigung des Maßstabs an seinen Enden Befestigungselemente vorgesehen, die einen Längenausgleich in Richtung der Längserstreckung des Maßstabs ermöglichen. Somit kann durch diese Art der Befestigung mit einer kraftschlüssigen Verbindung im Verlauf der Längserstreckung des Maßstabs keine Anbringung des Maßstabs derart erreicht werden, daß dieser den Längenänderungen eines Objekts folgt. Dies wird erst durch den erfindungsgemäßen Maßstab, der Mittel für eine formschlüssige Verbindung entlang seiner Längserstreckung aufweist, erreicht.

Vorteilhafte Ausführungsformen der Erfindung finden sich in den weiteren Ansprüchen.

Gemäß einer bevorzugten Ausführungsform ist für die Vorrichtung zumindest eine formschlüssige Verbindung vorgesehen, die in einer Richtung wirkt, die parallel zur Längserstreckung des Maßstabs verläuft. In dieser Ausführungsform kann in der bereits angedeuteten Weise für die Vorrichtung erreicht werden, daß diese besonders gleichmäßig den Längenänderungen eines Objekts folgt. Dadurch, daß zumindest eine formschlüssige Verbindung im Verlauf seiner Längserstreckung in Richtung der Längserstreckung der Vorrichtung wirkt, wird an diesem Anbringpunkt der Vorrichtung über die formschlüssige Verbindung eine Kraft übertragen, welche die Vorrichtung an diesem Punkt in einer Lage hält, die relativ zu dem Objekt, an dem die Vorrichtung befestigt wird, fest ist.

Somit wird durch die Ausbildung formschlüssiger Verbindungen im Verlauf der Längserstreckung der Vorrichtung, insbesondere des Maßstabs, die in Richtung seiner Längserstreckung wirken, für einzelne Punkte eine unveränderbare Lage bezüglich eines Objekts erreicht, so daß für den gesamten Verlauf des Maßstabs sichergestellt werden kann, daß er sich gleichmäßig an jegliche Längenänderungen des Objekts anpaßt. Durch das dadurch erreichte besonders günstige "Mitatmen" des Maßstabs mit dem Objekt, dessen relative Lage zu erfassen ist, erhält man eine besonders präzise Erfassung dieser Lage, da die Lage der abzutastenden Punkte an dem Maßstab besonders exakt mit den jeweiligen Punkten an dem Objekt übereinstimmt.

Gemäß einer weiteren bevorzugten Ausführungsform können formschlüssige Verbindungen vorgesehen sein, die in einer Richtung wirken, die zur Langserstreckung der Vorrichtung senkrecht verläuft. Dadurch wird in vorteilhafter Weise erreicht, daß Schwingungen der Vorrichtung in Richtungen, die senkrecht zur Längserstreckung der Vorrichtung verlaufen, verhindert werden. Derartige Schwingungen können insbesondere bei vergleichsweise langen Maßstäben auftreten und verfälschen die Messung der relativen Lage des Maßstabs und damit natürlich der relativen Lage des Objekts, an dem der Maßstab befestigt ist. Durch die erfindungsgemäße formschlüssige Verbindung mit einer Wirkungsrichtung senkrecht zur Längserstreckung des Maßstabs kann für den erfindungsgemäßen Maßstab somit eine Befestigung erreicht werden, die eine besonders genaue Messung ermöglicht.

In einer bevorzugten Ausführungsform der erfindungsgemäßen Vorrichtung besteht die formschlüssige Verbindung aus einem Element mit zumindest bereichsweise sphärisch gekrümmter Oberfläche, das vorzugsweise an dem Maßstab angebracht ist und die erfindungsgemäßen Mittel für die formschlüssige Verbindung darstellt. Das Gegenstück für die formschlüssige Verbindung besteht in einer Kegelpfanne, einer sphärisch gekrümmten Pfanne oder einer weitgehend V-förmigen Nut, die bevorzugt an dem Objekt auszubilden ist, an das die Vorrichtung befestigt wird. Mit einer derartigen Ausführungsform des erfindungsgemäßen Maßstabs wurden hinsichtlich der Übertragung der auftretenden Kräfte über die formschlüssige Verbindung besonders gute Erfahrungen gemacht. Hierbei kann es sich um Kugeln mit einem Durchmesser von einigen Zentimetern handeln, die durch Schrauben an dem Maßstab angebracht werden. Ebenso ist es denkbar, kleinere Kugeln mit einem Durchmesser von einigen Millimetern zu verwenden.

Insbesondere für kleinere Kugeln ist es vorteilhaft, wenn diese an dem Maßstab in jeweilige kegelige Senkungen eingelassen sind. Diese Formen können mit geringem Aufwand an dem Maßstab ausgebildet werden, und in diesen können die kleinen Kugeln beispielsweise mit einem geeigneten Klebstoff fixiert werden. Hierbei werden sie derart in die kegeligen Senkungen eingelassen, daß sie von der Oberfläche vorstehen, so daß sie sich beim Anschrauben des Maßstabs in die Oberfläche des Objekts eingraben und somit für die erfindungsgemäße formschlüssige Verbindung sorgen.

Bevorzugt weist die formschlüssige Verbindung ferner zumindest einen Stift auf. Ein Stift, der vorzugsweise als Gewindestift ausgebildet ist, kann auf einfache Weise an dem Maßstab so eingesetzt und angebracht werden, daß er eine formschlüssige Verbindung mit dem Objekt ausbildet. Beispielsweise kann ein Gewindestift mit einer kegeligen Senkung an seinem vorderen Ende verwendet werden, um Kugeln, die in einer Bohrung in dem Maßstab an die Oberfläche des Objekts anliegend angeordnet wurden, in die Oberfläche des Objekts derart einzudrücken, daß eine formschlüssige Verbindung ausgebildet wird.

Für einen Stift als Bestandteil der formschlüssigen Verbindung bietet es ferner Vorteile, wenn dieser eine Kegelspitze oder eine Ringschneide aufweist. In beiden Fällen wird der Stift ohne die Verwendung von Kugeln in eine Bohrung in dem Maßstab derart eingeschraubt, daß sich sein entsprechend gestaltetes vorderes Ende in die Oberfläche des Objekts eingräbt. Besonders gute Erfahrungen wurden hierbei mit einer Ringschneide gemacht, die gewissermaßen als eine spitze Rippe ausgebildet ist, die im äußeren Bereich an der Stirnfläche des Stifts umlaufend ausgebildet ist.

Gemäß einer weiteren bevorzugten Ausführungsform besteht zumindest eine formschlüssige Verbindung einerseits aus einem Element mit zumindest bereichsweise zylindrisch gekrümmter Oberfläche, das vorzugsweise an dem Maßstab angebracht ist, und das Mittel für die Ausbildung einer formschlüssigen Verbindung im Verlauf der Längserstreckung des Maßstabs darstellt. Das vorzugsweise an dem Objekt auszubildende Gegenstück der formschlüssigen Verbindung besteht in einer zylindrisch gekrümmten oder einer weitgehend V-förmigen Nut. In die derart gestalteten Ausnehmungen werden bei der Anbringung des Maßstabs die entsprechenden Elemente mit bereichsweise zylindrisch gekrümmter Oberfläche aufgenommen und sorgen bei dem befestigten Maßstab für die Übertragung derjenigen Kräfte, die für den Maßstab Längenänderungen bewirken, die für besonders präzise Meßergebnisse ein "Mitatmen" des Maßstabs mit dem Objekt gewährleisten.

Ferner hat es sich als vorteilhaft erwiesen, wenn gemäß einer bevorzugten Ausführungsform für die Vorrichtung im Bereich ihrer Enden zumindest eine formschlüssige Verbindung mit dem Objekt vorgesehen ist. Demzufolge weist die Vorrichtung auch im Bereich ihrer Enden entsprechende Mittel für die Ausbildung einer formschlüssigen Verbindung auf. Wenngleich die Befestigung der Vorrichtung mit der erfindungsgemäßen formschlüssigen Verbindung im Bereich ihrer Längserstreckung an den Enden der Vorrichtung in beliebiger Weise bewerkstelligt werden kann, ist zu bevorzugen, diese Verbindungen als formschlüssige Verbindungen auszubilden, um die erwähnten Vorteile bei der Befestigung der Vorrichtung zu erhalten.

Bevorzugt sind diejenigen Mittel an der Vorrichtung, über die eine formschlüssige Verbindung ausgebildet wird, und insbesondere die Elemente mit den bereichsweise sphärisch und/oder zylindrisch gekrümmten Oberflächen, justierbar an der Vorrichtung angebracht. Durch diese Ausbildung des erfindungsgemäßen Vorrichtung ergeben sich besondere Vorteile, wenn ein an einem Objekt angebrachte Vorrichtung zu ersetzen ist. In diesem Fall sind an dem Objekt üblicherweise bereits diejenigen Formen ausgebildet, über welche die Vorrichtung durch formschlüssige Verbindungen an dem Objekt befestigt wird. Es tritt jedoch häufig der Fall auf, daß ein neu angefertigter Maßstab, der einen vorhandenen Maßstab ersetzen soll, aufgrund üblicher Toleranzen hinsichtlich seiner Abmessungen und der Abmessungen der Mittel für eine formschlüssige Verbindung derart von dem zu ersetzenden Maßstab abweicht, daß der neue Maßstab nur unzureichend in die an dem Objekt ausgebildeten Formen "paßt". Für diesen Fall kann die bevorzugte Ausführungsform des Maßstabs, bei der die entsprechenden Mittel und Elemente justierbar angebracht sind, für den Vorteil sorgen, daß die Lage der entsprechenden Objekte derart angepaßt werden kann, daß der Maßstab passend an einem Objekt angebracht werden kann, um einen vorhandenen Maßstab zu ersetzen.

Gemäß einem weiteren Aspekt der Erfindung wird eine Meßeinrichtung zur Messung der Relativbewegung zweier zueinander verschiebbarer Objekte vorgestellt, die einen erfindungsgemäßen Maßstab aufweist. Der Maßstab ist an einem ersten Objekt befestigt. Die Abtasteinheit ist an einem zweiten Objekt angebracht und wirkt mit dem Maßstab zur Erfassung der relativen Lage der beiden Objekte zusammen. Eine derartige Meßeinrichtung stellt gewissermaßen den üblichen Fall der Verwendung für den erfindungsgemäßen Maßstab dar.

Für die erfindungsgemäße Meßeinrichtung bestehend aus Maßstab und Abtasteinheit wird bevorzugt, daß diejenigen Formen, über die im Bereich des Objekts, an dem der Maßstab angebracht ist, die formschlüssige Verbindung erfolgt, unmittelbar in diesem Objekt ausgebildet sind. Dadurch ergibt sich der Vorteil, daß der Herstellungs- und Montageaufwand für die erfindungsgemäße Meßeinrichtung gering gehalten werden kann, da jegliche Objekte vermieden werden können, welche die entsprechenden Formen für eine formschlüssige Verbindung aufweisen und an einem Objekt anzubringen sind.

Gemäß einem weiteren Aspekt der Erfindung wird ein Verfahren zur Anbringung eines Maßstabs mit Elementen einer formschlüssigen Verbindung, die durchgehende Bohrungen aufweisen, an einem Objekt geschaffen.

Das erfindungsgemäße Verfahren weist die Merkmale des Anspruchs 10 auf. Demzufolge werden bei dem erfindungsgemäßen Verfahren die folgenden Schritte durchgeführt. Der Maßstab wird an dem Objekt an der für die Anbringung bestimmten Stelle angeordnet. Nachfolgend wird unter Verwendung der durchgehenden Bohrungen der Elemente an dem Maßstab an den entsprechenden Stellen jeweils eine Bohrung in dem Objekt ausgebildet. Bevorzugt kann die Verwendung der in den Elementen des Maßstabs ausgebildeten Bohrungen derart erfolgen, daß diese für die Markierung der entsprechenden Stellen an dem Objekt z.B. durch Körnen benutzt werden. Alternativ können geeignete Bohrwerkzeuge durch die genannten Bohrungen in den Elementen des Maßstabs geführt werden, um die Bohrungen in dem Objekt auszubilden.

Erfindungsgemäß werden nachfolgend im Bereich dieser Bohrungen in dem Objekt die Formen für die formschlüssigen Verbindungen zur Anbringung des Maßstabs unmittelbar in dem Objekt ausgebildet. Üblicherweise an diesen Verfahrensschritt anschließend werden die in dem Objekt ausgebildeten Bohrungen mit Gewinden versehen. Die Ausbildung der Gewinde kann jedoch auch vor der Ausbildung der für die formschlüssigen Verbindungen verwendeten Formen erfolgen.

Abschließend wird der Maßstab an dem Objekt mittels geeigneter Verbindungselemente derart befestigt, daß die genannten Objekte mit den unmittelbar in dem Objekt ausgebildeten Formen in Eingriff stehen und für eine formschlüssige Befestigung des Maßstabs an dem Objekt sorgen. Für die genannten Verbindungselemente werden Befestigungsschrauben bevorzugt, die in die in dem Objekt ausgebildeten Gewindebohrungen eingeschraubt werden.

Gemäß den für die erfindungsgemäße Anordnung bevorzugten Formen an dem Objekt wird für das erfindungsgemäße Verfahren bevorzugt, daß die in dem Objekt ausgebildeten Formen sphärisch gekrümmte Pfannen oder Kegelpfannen oder zylindrisch gekrümmte Nuten oder V-förmige Nuten sind.

Nachfolgend wird die Erfindung beispielhaft anhand von mehreren in den Zeichnungen dargestellten Ausführungsformen näher beschrieben. Es zeigt:
- Fig. 1: eine Draufsicht einer Meßeinrichtung mit dem erfindungsgemäßen Maßstab;
- Fig. 2: eine Seitenansicht des Maßstabs der in Fig. 1 gezeigten Meßeinrichtung;
- Fig. 3: einen Längsschnitt durch ein bei dem in den Fig. 1 und 2 gezeigten Maßstab verwendetes Element zur Ausbildung einer formschlüssigen Verbindung;
- Fig. 4: eine teilweise Draufsicht einer zweiten Ausführungsform des erfindungsgemäßen Maßstabs;
- Fig. 5: eine Draufsicht einer Meßeinrichtung mit einer dritten Ausführungsform des erfindungsgemäßen Maßstabs;
- Fig. 6: eine Vorderansicht der in Fig. 5 gezeigten Meßeinrichtung;
- Fig. 7: in einer Schnittansicht einen Abschnitt einer erfindungsgemäßen Vorrichtung mit der formschlüssigen Verbindung in einer weiteren Ausführungsform;
- Fig. 8: in einer Schnittansicht einen Abschnitt einer erfindungsgemäßen Vorrichtung mit der formschlüssigen Verbindung in einer noch weiteren Ausführungsform;
- Fig. 9: in einer Schnittansicht einen Abschnitt einer erfindungsgemäßen Vorrichtung mit der formschlüssigen Verbindung in einer weiteren Ausführungsform;
- Fig. 10: in einer Schnittansicht einen Abschnitt einer erfindungsgemäßen Vorrichtung mit der formschlüssigen Verbindung in einer noch weiteren Ausführungsform; und
- Fig. 11: eine Einzelheit der Anordnung gemäß Fig. 10.

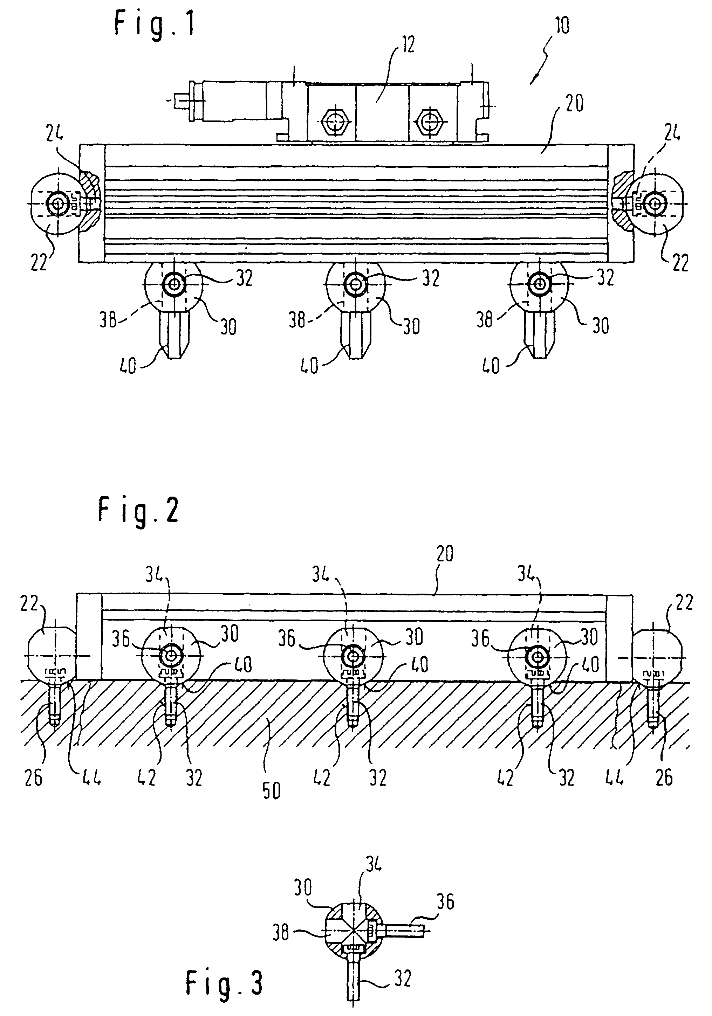

Wie in Fig. 1 zu erkennen ist, weist die dargestellte Ausführungsform einer Meßeinrichtung 10 zum einen eine Abtasteinheit 12 auf, die beispielsweise an einem beweglichen Objekt z.B. einer Werkzeugmaschine angebracht ist. Zum anderen weist die Meßeinrichtung 10 einen Maßstab 20 auf, der von der Abtasteinheit 12 in geeigneter Weise abgetastet wird, um die relative Lage eines bewegbaren Objekts zu einem feststehenden Objekt, wie z.B. einem Maschinenbett zu erfassen, an dem der Maßstab 20 angebracht ist. In der in Fig. 1 dargestellten Draufsicht der Meßeinrichtung 10 ist insbesondere das Gehäuse des Maßstabs 20 zu erkennen, in das ein Teil der Abtasteinheit 12 hineinragt, um eine in dem Gehäuse angeordnete Skale des Maßstabs 20 in geeigneter Weise abzutasten.

Nachfolgend wird die erfindungsgemäße Befestigung des Maßstabs 20 an einem Objekt im einzelnen beschrieben. Für die Befestigung des Maßstabs 20 an einem Objekt, bei welcher der Maßstab 20 für eine besonders genaue Erfassung der relativen Lage eines Objekts jeglichen Längenänderungen dieses Objekts folgt, weist dieser an seinen Enden jeweils eine Kugel 22 auf. Die Kugeln 22 sind jeweils über Schrauben 24 an dem Maßstab 20 befestigt und stellen Mittel für eine formschlüssige Befestigung des Maßstabs 20 an einem Objekt dar. Diese Befestigung des Maßstabs 20 an seinen Enden wird nachfolgend genauer erklärt.

Erfindungsgemäß weist der Maßstab 20 ferner Mittel auf, die einer formschlüssigen Verbindung entlang der Längserstreckung des Maßstabs 20 mit einem Objekt dienen. Diese Mittel werden bei der in Fig. 1 dargestellten Ausführungsform durch drei seitlich an dem Maßstab 20 befestigte Kugeln 30 gebildet. Die an dem Maßstab 20 befestigten Kugeln 30 stellen den einen Teil der erfindungsgemäßen formschlüssigen Verbindungen mit einem Objekt dar. Der zweite Teil dieser formschlüssigen Verbindungen wird durch Nuten 40 gebildet, die an dem Objekt, an dem der Maßstab 20 zu befestigen ist, ausgebildet sind. In der Draufsicht von Fig. 1 sind die drei bei der gezeigten Ausführungsform ausgebildeten Nuten 40 mit ihrem Umriß zu erkennen.

Wie aus der in Fig. 2 dargestellten Seitenansicht mit einem Teilschnitt hervorgeht, sind die Nuten 40 jeweils weitgehend V-förmig in dem Objekt 50 ausgebildet, an dem der Maßstab 20 befestigt ist. An die Nuten 40 schließen sich jeweils Gewindebohrungen 42 an, in die Befestigungsschrauben 32 eingedreht sind, die durch in vertikaler Richtung in den Kugeln 30 jeweils ausgebildete Bohrungen 34 eingeführt sind.

Ferner sind in Fig. 2 diejenigen Schrauben 36 zu erkennen, durch welche die Kugeln 30 an dem Meßstab 20 seitlich befestigt sind. Hierzu sind die Schrauben 36 durch zweite, in horizontaler Dichtung in den Kugeln 30 ausgebildete Bohrungen 38 geführt, die am besten in der Draufsicht von Fig. 1 zu erkennen sind.

Zu der Funktion der Schrauben 32, durch welche der Maßstab 20 über die Kugeln 30 an dem Objekt 50 befestigt ist, ist anzumerken, daß diese nicht der Kraftübertragung zwischen dem Objekt 50 und dem Maßstab 20 dienen. Erfindungsgemäß findet die Übertragung jeglicher Kräfte, die aufgrund von Längenänderungen des Objekts 50 und des Maßstabs 20 infolge von Temperaturschwankungen auftreten, über die formschlüssige Verbindung in Form der Kugeln 30 und der Nuten 40 statt. Dies bedeutet, daß anhand der Erfindung auf besonders stark dimensionierte Befestigungsschrauben, die bei einer kraftschlüssigen Verbindung notwendig wären, verzichtet werden kann.

Vielmehr findet erfindungsgemäß die Kraftübertragung an den im Verlauf der Längserstreckung des Maßstabs 20 ausgebildeten formschlüssigen Verbindungen statt. Hierdurch wird zum einen erreicht, daß der Maßstab 20 an denjenigen Stellen, an denen sich die formschlüssigen Verbindungen im Bereich seiner Längserstreckung befinden, unmittelbar den Längenänderungen des Objekts 50 folgt. Damit die relative Lage des Maßstabs 20 über selne gesamte Länge mit der relativen Lage des Objekts 50 übereinstimmt, ist der Maßstab 20 in der gezeigten Ausführungsform auch an seinen Enden über formschlüssige Verbindungen mit dem Objekt 50 verbunden. Hierzu sind in der oben beschriebenen Weise jeweils Kugeln 22 an dem Maßstab 20 angebracht.

Über vertikal angeordnete Schrauben 26 sind die Kugeln 22 mit dem Objekt 50 verschraubt. Für die formschlüssige Befestigung des Maßstabs 20 über die Kugeln 22 ist das Objekt 50 an den entsprechenden Stellen mit weiteren, in Fig. 2 senkrecht zur Zeichenebene verlaufenden Nuten 44 versehen. In diese Nuten 44 sind die Kugeln 22 mit ihren sphärisch gekrümmten Oberflächen derart eingepaßt, daß über die dadurch ausgebildeten formschlüssigen Verbindungen eine Befestigung des Maßstabs 20 an dem Objekt 50 erreicht wird, bei welcher der Maßstab 20 im Bereich seiner gesamten Länge den Längenänderungen des Objekts 50 folgt.

Für die in den Fig. 1 und 2 gezeigte Ausführungsform des erfindungsgemäßen Maßstabs ist ferner anzumerken, daß auch die für die seitlichen formschlüssigen Verbindungen an dem Objekt 50 ausgebildeten Nuten 40 in einer Richtung senkrecht zur Längserstreckung des Maßstabs 20 verlaufen. Hierdurch kann der beschriebene "Mitnahme-Effekt" erhalten werden, indem nämlich über die seitlich an dem Maßstab 20 ausgebildeten formschlüssigen Verbindungen, die in Richtung der Längserstreckung des Maßstabs wirken, gewährleistet wird, daß die jeweiligen Stellen unmittelbar den Längenänderungen des Objekts 50 folgen.

In Fig. 3 ist zur Verdeutlichung der Struktur der Kugeln 30, welche die Mittel für eine formschlüssige Verbindung zwischen dem Maßstab 20 und dem Objekt 50 darstellen, ein Längsschnitt einer derartigen Kugel 30 gezeigt. Jeweils durch den Mittelpunkt der Kugel 30 hindurchgehend sind zwei um 90° versetzte Bohrungen 34, 38 ausgebildet. Durch die in horizontaler Richtung verlaufende Bohrung 38 ist die Schraube 36 geführt, über welche die Kugel 30 an dem Maßstab 20 befestigt ist. In ähnlicher Weise ist durch die in vertikaler Richtung verlaufende Bohrung 34 die Schraube 32 geführt, über welche die Kugel 30 im Bereich der jeweiligen Nut 40 an dem Objekt 50 befestigt ist. Für die jeweilige Verbindung weist die Bohrung 34, 38 an dem einen Ende jeweils einen Bereich mit einem verringerten Durchmesser auf, durch den der Schaft der jeweiligen Schraube 32, 36 geführt ist. An der entstehenden Stufe stützt sich jeweils der Kopf der Schraube 32, 36 ab.

Über die mit Ausnahme der Durchbruche der Bohrungen 34, 38 sphärisch gekrümmte Oberfläche der jeweiligen Kugel 30 findet die Kraftübertragung mit der jeweiligen Nut 40 im Rahmen der formschlüssigen Befestigung des Maßstabs 20 statt. In diesem Zusammenhang versteht es sich, daß auch die an den Enden des Maßstabs 20 angebrachten Kugeln 22 mit der in Fig. 3 dargestellten Struktur ausgebildet sein können. Für die Befestigung des Maßstabs 20 an seinen Enden kann jedoch auch eine andere Art der Befestigung vorgesehen sein. Erfindungsgemäß erfolgt insbesondere im Bereich der Längserstreckung des Maßstabs 20 eine formschlüssige Verbindung mit einem Objekt 50, die in dem gezeigten Fall durch die Kugeln 30 und die jeweiligen Nuten 40 gebildet wird.

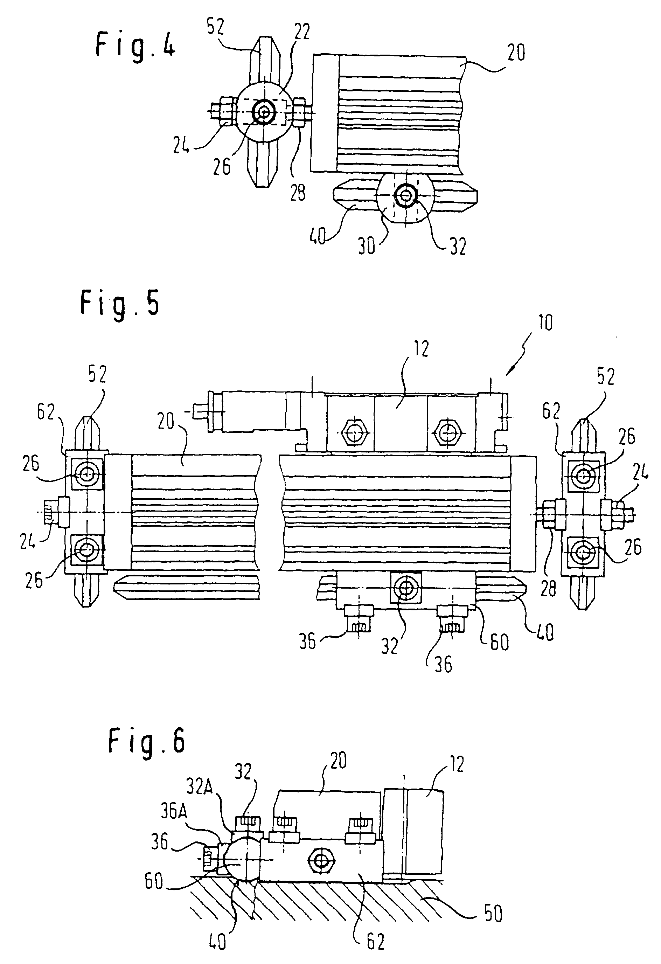

In Fig. 4 ist eine Teil-Draufsicht eines an einem Objekt befestigten Maßstabs 20 in einer zweiten Ausführungsform dargestellt. Diese Ausführungsform unterscheidet sich sowohl hinsichtlich der Gestaltung der Befestigung des Maßstabs 20 an dem Objekt an seinen Enden als auch hinsichtlich der erfindungsgemäßen seitlichen formschlüssigen Befestigung des Maßstabs 20 von der in den Fig. 1 und 2 dargestellten Ausführungsform.

Wie in der Draufsicht von Fig. 4 zu erkennen ist, ist zum einen die Anbringung der Kugel 22 an dem Maßstab 20 andersartig gestaltet. Gemäß einer bevorzugten Ausführungsform des erfindungsgemäßen Maßstabs ist für diese Kugel 22 eine Justierung vorgesehen. Diese Justierung zur Anpassung der Lage der Kugel 22 an die Position einer Nut 52 in dem Objekt wird durch eine Schraube 24, die durch die Kugel 22 zur Befestigung an dem Maßstab 20 hindurchreicht, und eine Gegenmutter 28 erreicht. Zur exakten Anpassung der Lage der Kugel 22 an die Position der Nut 52 erfolgt eine Justierung durch geeignetes Eindrehen der Schraube 24 und ein nachfolgendes Fixieren der Kugel 22 durch die Gegenmutter 28.

Diese Justierbarkeit der Kugel 22 ist insbesondere bei der Verwendung des erfindungsgemäßen Maßstabs 20 als Austauschobjekt von Vorteil, wenn ein neuer Maßstab 20 an ein Objekt angebracht werden soll, in dem beispielsweise die Nuten 52 an den Enden des Maßstabs 20 bereits ausgebildet sind. Aufgrund nicht zu vermeidender Fertigungstoleranzen kann nicht davon ausgegangen werden, daß ein neu angefertigter Maßstab vollkommen exakt in die vorhandenen Nuten 52 paßt. Deshalb kann die Lage der Kugeln 22, über die der Maßstab 20 formschlüssig an dem Objekt befestigt wird, durch den beschriebenen Justagemechanismus angepaßt werden. Die Befestigung der Kugel 22 in der Nut 52 zur Ausbildung der formschlüssigen Verbindung erfolgt in der gleichen Weise wie der bei den Fig. 1 und 2 dargestellten Ausführungsform über eine Schraube 26.

Der beschriebene Justagemechanismus für die Kugel 22 als das an dem Maßstab 20 angebrachte Element einer formschlüssigen Verbindung kann natürlich in der gleichen Weise für die im Verlauf der Längserstreckung des Maßstabs ausgebildeten formschlussigen Verbindungen verwendet werden. In Fig. 4 ist eine solche formschlüssige Verbindung im Verlauf der Längserstreckung des Maßstabs 20 in einer zweiten Ausführungsform dargestellt. In dieser Ausführungsform wirkt die formschlüssige Verbindung in einer Richtung senkrecht zur Längserstreckung des Maßstabs. In dieser Ausbildung unterscheidet sich die formschlüssige Verbindung mit dem Objekt von der in den Fig. 1 und 2 dargestellten Ausführungsform lediglich durch die Orientierung der in dem Objekt ausgebildeten Nut 40.

Wie in der Draufsicht von Fig. 4 zu erkennen ist, erstreckt sich die Nut, in die zur formschlüssigen Befestigung des Maßstabs 20 eine Kugel 30 eingepaßt wird, parallel zur Längserstreckung des Maßstabs 20, also gemäß der Darstellung von Fig. 4 von links nach rechts. In dieser Ausfuhrungsform kann über die formschlüssige Verbindung zwischen Kugel 30 und Nut 40 eine Kraft übertragen werden, die senkrecht zur Längserstreckung des Maßstabs 20 wirkt. Diese Art der formschlüssigen Befestigung des Maßstabs 20 kann in vorteilhafter Weise für vergleichsweise lange Maßstabe verwendet werden, um jegliche Schwingungen senkrecht zur Längserstreckung des Maßstabs 20, welche die exakte Erfassung der relativen Lage des Maßstabs 20 durch eine Abtasteinheit beeinträchtigen würden, zu verhindern.

Durch die in der oben beschriebenen Weise ausgeführte Befestigung der Kugel 30 in der Nut 40 über eine Schraube 32 erfolgt darüber hinaus eine Fixierung des Maßstabs 20 in einer Richtung senkrecht zur Zeichenebene, so daß insbesondere für lange Maßstäbe eine gute Abstützung des Maßstabs im Verlauf seiner Längserstreckung erreicht werden kann. Durch die erfindungsgemäße formschlüssige Verbindung in Form der Kugel 30 und der Nut 40, deren Wirkrichtung in der Zeichenebene senkrecht zur Längserstreckung des Maßstabs 20 erfolgt, können darüber hinaus jegliche Schwingungen in dieser Richtung vermieden werden.

In Fig. 5 ist eine weitere Ausführungsform des erfindungsgemäßen Maßstabs dargestellt, bei der durch die besondere Ausbildung der seitlich ausgebildeten formschlüssigen Befestigungen des Maßstabs 20 die voranstehend beschriebenen vorteilhaften Wirkungen erreicht werden können. In der Draufsicht von Fig. 5 ist in gleicher Weise wie bei Fig. 1 ein vollständiges Meßsystem 10 bestehend aus einer Abtasteinheit 12 und dem erfindungsgemäßen Maßstab 20 zu erkennen. Aus der Draufsicht geht ferner hervor, daß bei der in Fig. 5 gezeigten Ausführungsform die formschlüssigen Verbindungen in Form von Zylindern 60, 62 gestaltet sind. Für die Ausbildung der erfindungsgemäßen formschlüssigen Verbindung im Verlauf der Längserstreckung des Maßstabs 20 wirkt der seitlich über zwei Schrauben 36 an dem Maßstab 20 angebrachte Zylinder 60 mit einer parallel zur Längserstreckung des Maßstabs verlaufenden Nut 40 zusammen.

Diese Nut 40 entspricht mit dem Unterschied, daß sie für die Aufnahme des Zylinders 60 langer ausgebildet ist, der in Fig. 4 dargestellten Nut 40 für die Aufnahme der Kugel 30. In der in Fig. 5 dargestellten Ausführungsform erfolgt die Befestigung des Zylinders 60 in der Nut 40 in analoger Weise über eine Schraube 32. Auch in dieser Ausführungsform der erfindungsgemäßen formschlüssigen Verbindung mit einer Wirkrichtung senkrecht zur Längserstreckung des Maßstabs 20 können diejenigen Vorteile erreicht werden, die voranstehend für die in Fig. 4 gezeigte Ausführungsform erläutert wurden. Insbesondere wirkt zur Vermeidung von Schwingungen in einer Richtung senkrecht zur Längserstreckung des Maßstabs 20 die zylindrisch gekrümmte Oberfläche des Zylinders 60 mit den Nutenflanken der weitgehend V-förmigen Nut 40 zusammen.

Bei der in Fig. 5 dargestellten Ausführungsform sind auch die formschlüssigen Verbindungen an den Enden des Maßstabs 20 über Zylinder 62 und Nuten 52 ausgebildet. In gleicher Weise wie bei der in Fig. 4 dargestellten Anbringung der Kugel 22 an dem Maßstab 20 ist der in Fig. 5 rechts dargestellte Zylinder 62 durch eine Schraube 24 und eine Gegenmutter 28 justierbar an dem Maßstab 20 angebracht. Die Anbringung des links befindlichen Zylinders 62 an dem Maßstab 20 erfolgt über eine einfache Schraube 24. Zur Befestigung der beiden Zylinder 62 in den Nuten 52 werden in analoger Weise wie bei den für die bisher beschriebenen Ausführungsformen verwendeten Kugeln 22 Schrauben 26 verwendet.

Aus der Vorderansicht von Fig. 6 ist die bei der in Fig. 5 dargestellten Ausführungsform des erfindungsgemaßen Maßstabs 20 gewählte Form der formschlüssigen Verbindung mit dem Objekt 50 deutlicher zu erkennen. In dieser Ansicht (gemäß Fig. 5 von rechts) wird deutlich, wie der seitlich über Schrauben 36 an dem Maßstab 20 angebrachte Zylinder 60 mit den Nutenflanken der Nut 40 zur formschlüssigen Befestigung des Maßstabs 20 zusammenwirkt. Es ist insbesondere zu erkennen, daß bei einer Krafteinwirkung auf den Maßstab 20 in einer Richtung von rechts nach links von Fig. 6 eine Abstützung des Maßstabs 20 über die zylindrisch gekrümmte Oberfläche des Zylinders 60 und die jeweilige Nutenflanke der Nut 40 derart erfolgt, daß Schwingungen des Maßstabs 20 in seitlicher Richtung parallel zur Zeichenebene gemäß Fig. 6 verhindert werden. Durch die Befestigung des Zylinders 60 über die Schraube 32 in einer Richtung senkrecht zur Oberfläche des Objekts 50 können auch in dieser Richtung Bewegungen des Maßstabs 20 verhindert werden, die zu einer Verfälschung der Erfassung der relativen Lage des Maßstabs 20 durch die Abtasteinheit 12 führen würden.

In Fig. 6 ist darüber hinaus zu erkennen, daß die Befestigung des Zylinders 60 durch die Schrauben 32, 36 jeweils über Zwischenstücke 32A, 36A erfolgt. Diese Zwischenstücke 32A, 36A sind jeweils mit Nuten ähnlich zu der Nut 40 versehen, um eine besonders vorteilhafte Kraftübertragung der Befestigungskräfte von den Schrauben 32, 36 auf den Zylinder 60 zu erreichen. Die Befestigung des Zylinders 62 am Ende des Maßstabs 20 sowohl an dem Maßstab 20 selbst als auch an dem Objekt 50 ist ähnlich ausgebildet.

Erfindungsgemäß liegt in Form der formschlüssigen Verbindung zwischen dem seitlich an dem Maßstab 20 angebrachten Zylinder 60 und der in dem Objekt 50 ausgebildeten Nut 40 eine formschlüssige Verbindung des Maßstabs 20 mit dem Objekt 50 im Verlauf seiner Längserstreckung vor, durch die eine vorteilhafte Abstützung und Befestigung in einer Richtung senkrecht zur Längserstreckung des Maßstabs erreicht wird.

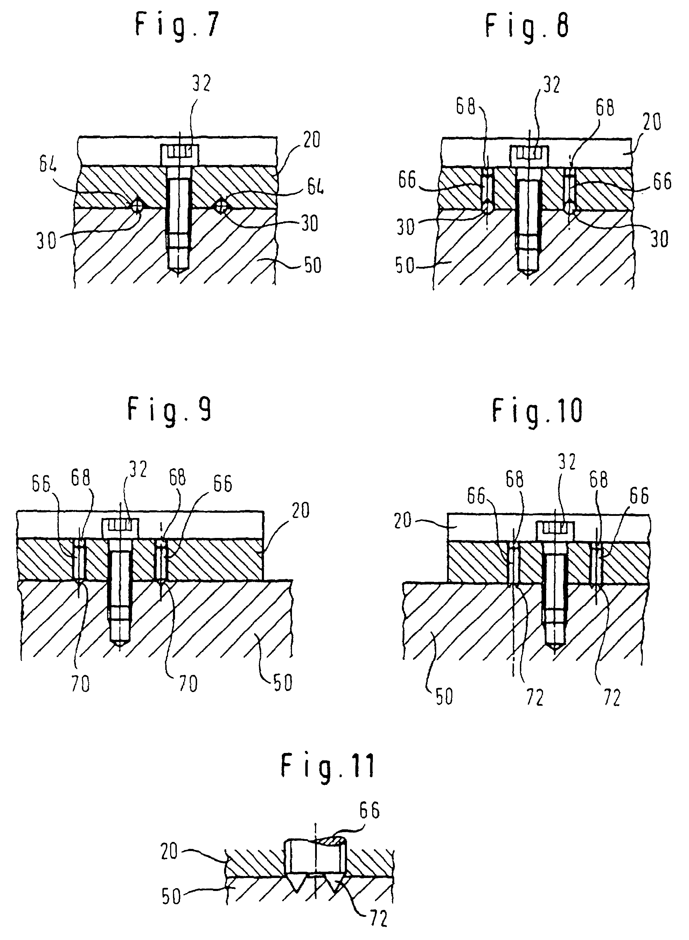

In Fig. 7 ist in einer Schnittdarstellung ein Teil des erfindungsgemäßen Maßstabs 20 gezeigt, an dem eine formschlüssige Verbindung mit dem Objekt 50 in einer weiteren Ausführungsform ausgebildet ist. Der Maßstab 20 ist zum einen kraftschlüssig über eine Schraube 32 mit dem Objekt 50 verbunden. Für die erfindungsgemäße formschlüssige Verbindung des Maßstabs mit dem Objekt 50 sorgen bei dem gezeigten Ausführungsbeispiel zwei Kugeln 30, die deutlich kleiner sind als die vorangehend beschriebenen Kugeln. In dem Fall der Anordnung gemäß Fig. 7 weisen die Kugeln einen Durchmesser von einigen Millimetern auf.

Wie in Fig. 7 zu erkennen ist, sind die Kugeln zu beiden Seiten neben der Schraube 32 angeordnet. Im ubrigen entspricht die Darstellung von Fig. 7 einem Längsschnitt, d.h. die Kugeln 30 und die Schraube 32 sind entlang der Längsrichtung des Maßstabs 20 angeordnet. Die formschlüssige Verbindung wird seitens des Maßstabs durch eine kegelige Senkung 64 erreicht, in welche die Kugel 30 jeweils eingelassen ist. Im Rahmen der Anbringung des Maßstabs können die Kugeln 30 in der jeweiligen Senkung 64 beispielsweise durch einen Klebstoff fixiert werden.

Nachfolgend wird der Maßstab an der Oberfläche des Objekts 50 angeordnet und durch die Schraube 32 befestigt. Hierbei drücken sich die beiden Kugeln 30 jeweils in die Oberseite des Objekts 50 ein, so daß im Endzustand gewissermaßen eine Pfanne mit einer sphärisch gekrümmten Oberfläche ausgebildet wird, die mit der jeweiligen Kugel 30 zur Ausbildung einer formschlüssigen Verbindung zusammenwirkt. Dieses Eindrücken wird insbesondere dadurch ermöglicht, daß es sich bei dem Objekt 50 beispielsweise um ein Maschinenbett aus Grauguß handelt, in das sich die verwendeten Kugeln, die eine geeignete Härte aufweisen, eindrücken.

In Fig. 8 ist eine erfindungsgemäße Anordnung mit einer Kombination von Kugeln 30 und Stiften 66 gezeigt. Anstelle der kegeligen Senkung 64 gemäß der Ausführungsform von Fig. 7 ist das vordere Ende des jeweiligen Stifts 66 mit einer kegeligen Senkung versehen. Ferner sind in dem Maßstab jeweilige Bohrungen 68 ausgebildet. Nachdem der Maßstab durch die kraftschlüssige Befestigungsschraube 32 an dem Objekt 50 angeschraubt wurde, werden die Kugeln 30 in die jeweilige Bohrung 68 eingesetzt. Nachfolgend wird ein Gewindestift 66 mit kegelig ausgenommener Stirnfläche in die Bohrung 68 eingeschraubt und drückt die Kugel 30 jeweils derart in die Oberfläche des Objekts 50, daß die erfindungsgemäße formschlüssige Verbindung ausgebildet wird. Hierdurch bewegt sich im befestigten Zustand der gesamte Bereich des Maßstabs 20 in der Umgebung der gezeigten Befestigungsstelle mit dem jeweiligen Bereich an dem Objekt 50 derart mit, daß Meßfehler aufgrund von unterschiedlicher Ausdehnung des Maßstabs 20 und des Objekts 50 beseitigt werden können.

In Fig. 9 ist eine weitere Ausführungsform der Erfindung unter Verwendung von Stiften 66 gezeigt. Die Befestigungsschraube 32 und die Bohrungen 68 in dem Maßstab 20 entsprechen der Ausführungsform von Fig. 8. Jedoch weisen die beiden Stifte 66 eine Kegelspitze auf. Beim Einschrauben des jeweiligen Stifts 66, der als Gewindestift ausgebildet ist, in die Bohrung 68 drückt sich somit bei Erreichung der Oberfläche des Objekts 50 die Kegelspitze 70 in das Objekt ein, so daß wiederum die erfindungsgemäße formschlüssige Verbindung zwischen dem Maßstab und dem Objekt 50 ausgebildet wird.

Ähnlich der Ausführungsform von Fig. 9 sind bei der Ausführungsform gemäß Fig. 10 zwei Stifte 66 in eine Bohrung 68 in dem Maßstab 20 eingeschraubt. Bei der besonders vorteilhaften Ausführungsform von Fig. 10 weisen die beiden Stifte 66 jedoch eine Stirnseite auf, die mit einer sogenannten Ringschneide 72 versehen ist. Bei der Ringschneide handelt es sich im wesentlichen um eine spitze Rippe mit einem weitgehend dreieckförmigen Querschnitt, die im Randbereich der Stirnseite des jeweiligen Stifts 66 umlaufend ausgebildet ist. Ähnlich wie bei der Ausführungsform von Fig. 9 drückt sich die Ringschneide beim Festschrauben des Gewindestifts 66 in die Oberfläche des Objekts 50 ein und sorgt für einen Formschluß mit der beim Einschrauben in dem Objekt ausgebildeten Vertiefung.

Zur Verdeutlichung ist in Fig. 11 der Bereich der vorderen Stirnseite eines Stifts 66 mit der Ringschneide 72 gezeigt. Die Ringschneide ist spitz gestaltet und weist eine kreisförmig umlaufende scharfe Vorderkante auf. Wie in Fig. 11 gut ersichtlich ist, dringt diese Vorderkante beim Festschrauben des Stifts 66 in die Oberfläche des Objekts 50 ein und verbindet somit in vorteilhafter Ergänzung zu dem Kraftschluß durch die Schraube 32 den Maßstab 20 formschlüssig mit dem Objekt 50. Mit dieser Ausführungsform konnten bei Versuchen besonders gute Ergebnisse für ein Ausdehnungsverhalten eines in dieser Weise angebrachten Maßstabs 20 beobachtet werden. Die Vorrichtung folgt dem Ausdehnungsverhalten des Objekts 50 äußerst exakt, und somit werden Meßfehler aufgrund von Ausdehnungen, die beispielsweise infolge von Temperaturschwankungen auftreten können, minimiert.

Im Rahmen des erfindungsgemäßen Verfahrens zur Anbringung eines Maßstabs können nämlich bei dem in Fig. 2 dargestellten Ausführungsbeispiel die Kugeln 22, 30 selbst für die Markierung und Ausbildung der entsprechenden Formen verwendet werden. Hierzu wird erfindungsgemäß der Maßstab 20 mit den daran angebrachten Kugeln 22, 30 an einer gewünschten Stelle des Objekts 50 angeordnet, und diejenigen Stellen, an denen die Nuten 44, 40 auszubilden sind, werden zunächst unter Verwendung der Kugeln 22, 30 markiert. Nachfolgend können an diesen Stellen die Gewindebohrungen ausgebildet werden, in welche die Befestigungsschrauben 26, 32 beim Anbringen des Maßstabs 20 eingeschraubt werden. Dann werden an den entsprechenden Stellen unmittelbar in dem Objekt 50 die für die Aufnahme der Kugeln 22, 30 erforderlichen Nuten 44, 40 ausgebildet. Diese können z.B. unmittelbar in das Objekt 50 eingefräst werden. Abschließend wird der Maßstab 20 für seine formschlüssige Befestigung über die durch die Kugeln 22, 30 geführten Befestigungsschrauben 26, 32 an dem Objekt 50 befestigt. Der Kopf der Befestigungsschrauben 26, 32 stützt sich jeweils an einer Stufe zu einem Bereich der Bohrung 36 mit geringerem Durchmesser ab.

## Patentansprüche

1. Maßstab einer Meßeinrichtung zur Messung der Relativbewegung zweier zueinander bewegbarer Objekte (50),
der an dem einen Objekt (50)befestigt wird, wobei
der Maßstab (20) Mittel (30, 60) für eine formschlüssige Verbindung mit dem Objekt (50) aufweist,
die entlang der Längserstreckung des Maßstabs ausgebildet ist,
indem an einer in Längserstreckung verlaufenden Seitenfläche des Maßstabs (20) mehrere voneinander beabstandete Elemente (30) angeordnet sind, die unmittelbar formschlüssig in das Objekt (50) eingreifen.

2. Vorrichtung nach Anspruch 1,
**dadurch gekennzeichnet, daß**
zumindest eine formschlüssige Verbindung in einer Richtung wirkt, die parallel zur Längserstreckung des Maßstabs (20) verläuft.

3. Vorrichtung nach einem der Ansprüche 1 oder 2,
**dadurch gekennzeichnet, daß**
zumindest eine formschlüssige Verbindung in einer Richtung wirkt, die zur Längserstreckung des Maßstabs (20) senkrecht verläuft.

4. Vorrichtung nach zumindest einem der vorangehenden Ansprüche,
**dadurch gekennzeichnet, daß**
zumindest eine formschlüssige Verbindung aus einem Element (30) mit zumindest bereichsweise sphärisch gekrümmter Oberfläche und einer Kegelpfanne oder einer sphärisch gekrümmten Pfanne oder einer weitgehend V-förmigen Nut (40) besteht, wobei das Element (30) mit der bereichsweise sphärisch gekrümmten Oberfläche an dem Maßstab (20) angebracht ist und formschlüssig unmittelbar in das Objekt (50) eingreift.

5. Vorrichtung nach zumindest einem der vorangehenden Ansprüche,
**dadurch gekennzeichnet , daß**
das Element (30) mit der bereichsweise sphärisch gekrümmten Oberfläche an dem Maßstab (20) in eine kegelige Senkung (64) eingelassen ist.

6. Vorrichtung nach zumindest einem der vorangehenden Ansprüche,
**dadurch gekennzeichnet, daß**
die formschlüssige Verbindung zumindest einen Stift (66), vorzugsweise einen Gewindestift, aufweist.

7. Vorrichtung nach Anspruch 6,
**dadurch gekennzeichnet, daß**
der Stift (66) eine Kegelspitze (70) oder eine Ringschneide (72) aufweist.

8. Vorrichtung nach zumindest einem der Ansprüche 4 bis 7,
**dadurch gekennzeichnet, daß**
die Elemente (22, 30, 60, 62) mit den bereichsweise sphärisch und/oder zylindrisch gekrümmten Oberflächen justierbar an dem Maßstab (20) (12) angebracht sind.

9. Meßeinrichtung (10) zur Messung der Relativbewegung zweier zueinander verschiebbarer Objekte, mit:
- einem Maßstab (20) nach zumindest einem der Ansprüche 1 bis 8, der an einem ersten Objekt (50) befestigt ist, und
- einer Abtasteinheit (12) die an einem zweiten Objekt angebracht ist und mit dem Maßstab (20) zur Erfassung der relativen Lage der beiden Objekte zusammenwirkt.

10. Verfahren zur Anbringung eines Maßstabs (20) mit Elementen einer formschlüssigen Verbindung, die durchgehende Bohrungen aufweisen, an einem Objekt (50), mit den Schritten:
a) Anordnen des Maßstabs (20) an dem Objekt (50) an der für die Anbringung bestimmten Stelle,
b) Ausbilden von Bohrungen in dem Objekt (50) unter Verwendung der durchgehenden Bohrungen der Elemente (22, 30) an dem Maßstab (20),
c) Ausbilden von Formen für die formschlüssigen Verbindungen in dem Objekt (50) im Bereich der Bohrungen,
d) Ausbilden von Gewinden im Bereich der Bohrungen,
e) Befestigen des Maßstabs (20) an dem Objekt (50) mittels Verbindungselementen, vorzugsweise Befestigungsschrauben (26, 32).

## Claims

1. Measuring scale for a measuring device for measuring the relative movement of two objects (50) which can be moved relative to one another, which is secured to the one object (50), wherein
the scale (20) has means (30, 60) for making a form-fit connection with the object (50),
said connection being provided along the longitudinal extension of the scale,
by a plurality of elements (30), which engage directly in the object (50) as a form fit, being disposed at a spacing from one another on a lateral surface,
extending in the longitudinal extension, of the scale (20).

2. Device according to claim 1,
**characterised in that**
at least one form-fit connection acts in a direction which runs parallel to the longitudinal extension of the scale (20).

3. Device according to one of claims 1 or 2,
**characterised in that**
at least one form-fit connection acts in a direction which runs perpendicularly with respect to the longitudinal extension of the scale (20).

4. Device according to at least one of the preceding claims,
**characterised in that**
at least one form-fit connection comprises an element (30) having a surface which is spherically curved at least in regions and a conical socket or a spherically curved socket or a largely V-shaped groove (40), the element (30) with the partially spherically curved surface being attached to the scale (20) and engaging directly in the object (50) as a form fit.

5. Device according to at least one of the preceding claims,
**characterised in that**
the element (30) with the partially spherically curved surface is inserted into a conical depression (64) on the scale (20).

6. Device according to at least one of the preceding claims,
**characterised in that**
the form-fit connection has at least one pin (66), preferably a set screw.

7. Device according to claim 6,
**characterised in that**
the pin (66) has a conical tip (70) or a cup point (72).

8. Device according to at least one of claims 4 to 7,
**characterised in that**
the elements (22, 30, 60, 62) with the partially spherically and/or cylindrically curved surfaces are attached to the scale (20) (12) so as to be adjustable.

9. Measuring device (10) for measuring the relative movement of two objects which can be displaced relative to one another, having:
- a scale (20) according to at least one of claims 1 to 8, which is secured to a first object (50), and
- a scanning unit (12) which is attached to a second object and cooperates with the scale (20) to detect the relative position of the two objects.

10. Method of attaching a scale (20) having elements of a form-fit connection, which have through bores, to an object (50), with the steps:
a) arranging the scale (20) on the object (50) at the location intended for attachment,
b) forming bores in the object (50) using the through bores of the elements (22, 30) on the scale (20),
c) forming shapes for the form-fit connections in the object (50) in the region of the bores,
d) forming threads in the region of the bores,
e) securing the scale (20) to the object (50) by means of connecting elements, preferably fastening screws (26, 32).

## Revendications

1. Règle d'un dispositif de mesure pour la mesure du déplacement relatif de deux objets (50) l'un par rapport à l'autre,
qui est fixée à l'un des objets (50) ;
la règle (20) présentant des moyens (30, 60) pour assurer une liaison par complémentarité de formes avec l'objet (50),
qui sont aménagés le long de la règle, dans la direction longitudinale de celle-ci,
plusieurs éléments (30) espacés les uns des autres, qui viennent en prise directement par complémentarité de formes avec l'objet (50), étant disposés sur une surface latérale longitudinale de la règle (20).

2. Dispositif selon la revendication 1, **caractérisé en ce qu'**au moins une liaison par complémentarité de formes agit dans une direction qui est parallèle à la longueur de la règle (20).

3. Dispositif selon une des revendications 1 ou 2, **caractérisé en ce qu'**au moins une liaison par complémentarité de formes agit dans une direction qui est perpendiculaire à la longueur de la règle (20).

4. Dispositif selon au moins une des revendications précédentes, **caractérisé en ce qu'**au moins une liaison par complémentarité de formes se compose d'un élément (30) avec une surface au moins localement courbe, sphérique et d'une rondelle à portée conique ou d'une rondelle à portée sphérique ou d'une rainure (40) en V, l'élément (30) avec la surface localement courbe, sphérique, étant monté sur la règle (20) et étant en prise directement par complémentarité de formes avec l'objet (50).

5. Dispositif selon au moins une des revendications précédentes, **caractérisé en ce que** l'élément (30) à surface localement courbe, sphérique, est logé dans une cuvette (64) conique sur la règle (20).

6. Dispositif selon au moins une des revendications précédentes, **caractérisé en ce que** la liaison par complémentarité de formes comprend une broche (66), de préférence une vis sans tête.

7. Dispositif selon la revendication 6, **caractérisé en ce que** la broche (66) présente un bout conique (70) ou une cuvette (72).

8. Dispositif selon au moins une des revendications précédentes, **caractérisé en ce que** les éléments (22, 30, 60 , 62) à surface localement courbe, sphérique et/ou cylindrique sont montés sur la règle (20).

9. Dispositif de mesure (10) pour la mesure du déplacement relatif de deux objets mobiles en translation l'un par rapport à l'autre, comportant
- une règle (20) selon au moins une des revendications 1 à 8, qui est fixée à un premier objet (50) et
- une unité de palpage (12) qui est montée sur le deuxième objet et coopère avec la règle (20) pour déterminer la position relative de deux objets.

10. Procédé de montage d'une règle (20) avec des éléments d'une liaison par complémentarité de formes, pourvus de trous débouchants, sur un objet (50), comprenant les étapes suivantes :
a) placement de la règle (20) sur l'objet (50), à l'emplacement prévu pour le montage,
b) réalisation de trous dans l'objet (50) en utilisant les trous débouchants des éléments (22, 30) dans la règle (20),
c) réalisation de formes pour les liaisons par complémentarité de formes, dans l'objet (50), dans la région des trous,
d) réalisation de filetages au niveau des trous,
e) fixation de la règle (20) sur l'objet (50) au moyen d'éléments de liaison, de préférence à l'aide de vis de fixation (26, 32).
